# EUROPÄISCHE PATENTANMELDUNG

(11) **EP 2 851 258 A1**
(43) Veröffentlichungstag der Anmeldung: **25.03.2015**
(21) Anmeldenummer: 14182772.5
(22) Anmeldetag: 29.08.2014
(51) Int. Cl.: B61D 17/12, B61D 27/00, B60H 1/00, B60H 1/26

(54) **Lüftungskanal und Fahrzeug mit entsprechendem Lüftungskanal**

(30) Priorität: 20.09.2013 DE 102013218921
(71) Anmelder: Siemens Aktiengesellschaft, 80333 München (DE)
(72) Erfinder: Taylan, Yüksel, 47551 Bedburg-Hau (DE); Alofs, Ludger, 47829 Krefeld (DE)

(57) **Zusammenfassung**

Die Erfindung betrifft einen Lüftungskanal (20) für ein Belüftungssystem (18) eines Fahrzeugs, insbesondere eines Schienenfahrzeugs (10) zur Personenbeförderung, mit einer den Kanal (20) nach außen begrenzenden Kanalwandung (26) und einem im Inneren des Kanals (20) angeordneten flexiblen Flächengebilde (36), das sich -im Querschnitt des Kanals (20) gesehen- von einer ersten Befestigungsstelle (38) am Innenumfang der Kanalwandung (26) bis zu einer zu dieser ersten Befestigungsstelle (38) beabstandet angeordneten zweiten Befestigungsstelle (40) am Innenumfang der Kanalwandung (26) erstreckt und den Kanal (20) in einen ersten Teilkanal (42) für Kaltluft und einen zweiten Teilkanal (44) für Warmluft aufteilt, wobei der Querschnitt jedes der Teilkanäle (42, 44) unter Verkleinerung des Querschnitts des jeweils anderen Teilkanals (44, 42) mittels einer allein durch die Luftdruck- und Volumenstromverhältnisse in den Teilkanälen (42, 44) steuerbare Verformung des flexiblen Flächengebildes (36) vergrößerbar ist. Es ist vorgesehen, dass die beiden Befestigungsstellen (38, 40) auf der gleichen Seite (30) der Kanalwandung (26) angeordnet sind, wobei das flexible Flächengebilde (36) und diese Seite (30) der Kanalwandung (36) den ersten Teilkanal (42) für die Kaltluft bilden. Die Erfindung betrifft weiterhin ein Fahrzeug, insbesondere Schienenfahrzeug (10) zur Personenbeförderung, mit einem Belüftungssystem (18), das einen oberhalb eines Innenraums (16) des Fahrzeugs (10) angeordneten Lüftungskanal (20) aufweist.

## Beschreibung

Die Erfindung betrifft einen Lüftungskanal für ein Belüftungssystem eines Fahrzeugs, insbesondere eines Schienenfahrzeugs zur Personenbeförderung, mit einer den Kanal nach außen begrenzenden Kanalwandung, und einem im Inneren des Kanals angeordneten flexiblen Flächengebilde, das sich -im Querschnitt des Kanals gesehen- von einer ersten Befestigungsstelle am Innenumfang der Kanalwandung bis zu einer zu dieser ersten Befestigungsstelle beabstandet angeordneten zweiten Befestigungsstelle am Innenumfang der Kanalwandung erstreckt und den Kanal in einen ersten Teilkanal für Kaltluft und einen zweiten Teilkanal für Warmluft aufteilt, wobei der Querschnitt jedes der Teilkanäle unter Verkleinerung des Querschnitts des jeweils anderen Teilkanals mittels einer allein durch die Luftdruck- und Volumenstromverhältnisse in den Teilkanälen steuerbare Verformung des flexiblen Flächengebildes vergrößerbar ist. Die Erfindung betrifft weiterhin ein Fahrzeug, insbesondere Schienenfahrzeug zur Personenbeförderung, mit einem Belüftungssystem, das einen oberhalb eines Innenraums des Fahrzeugs angeordneten Lüftungskanal aufweist.

Die WO 2007/006616 A1 zeigt einen im Profil rechteckigen Lüftungskanal eines Belüftungssystems von einem Schienenfahrzeug zur Personenbeförderung. Dieser Lüftungskanal umfasst eine den Kanal nach außen begrenzenden Kanalwandung und ein im Inneren der Kanalwandung angeordneten flexiblen Flächengebilde, das sich -im Querschnitt des Kanals gesehen- von einer ersten Befestigungsstelle am Innenumfang der linken Seite der Kanalwandung bis zu einer zweiten Befestigungsstelle am Innenumfang der gegenüberliegenden rechten Seite der Kanalwandung erstreckt und den Kanal in einen ersten Teilkanal für Kaltluft und einen darüber liegenden zweiten Teilkanal für Warmluft aufteilt, wobei der Querschnitt jedes der Teilkanäle unter Verkleinerung des Querschnitts des jeweils anderen Teilkanals mittels einer allein durch die Luftdruck- und Volumenstromverhältnisse in den Teilkanälen gesteuerten Verformung des flexiblen Flächengebildes vergrößerbar ist.

Ein solcher Lüftungskanal wird oberhalb des für die Fahrgäste vorgesehenen Innenraums im Rohbau des Fahrzeugs verbaut. Dabei bildet die Unterseite der Kanalwandung einen Teil der Decke des Innenausbaus. In der Unterseite sind Auslassöffnungen angeordnet, die direkte Strömungspfade von dem Teilkanal für Kaltluft in den Innenraum des Fahrzeugs bilden. Die Warmluft aus dem zweiten Teilkanal wird über Auslassdüsen an der linken und der rechten Seite der Kanalwandung und nachgeschaltete Leitelemente des Strömungssystems am Innenraum vorbei bis zu Lüftungsschlitzen im Bodenbereich des Innenraums geleitet und dort von unten in den Innenraum eingeleitet.

Der aus der oben genannten WO-Schrift bekannte Lüftungskanal baut relativ hoch, da die beiden Teilkanäle übereinander angeordnet sind. Die Auslassdüsen für die Warmluft müssen daher in der oberen Hälfte des Kanals angebracht werden.

Es ist die Aufgabe der Erfindung Maßnahmen anzugeben um die vorstehend genannten Schwierigkeiten zu überwinden.

Die Lösung der Aufgabe erfolgt durch die Merkmale der unabhängigen Ansprüche. Vorteilhafte Ausgestaltungen sind in den Unteransprüchen angegeben.

Bei dem erfindungsgemäßen Lüftungskanal ist vorgesehen, dass die beiden Befestigungsstellen auf der gleichen Seite der Kanalwandung angeordnet sind, wobei das flexible Flächengebilde und diese Seite der Kanalwandung den ersten Teilkanal für Kaltluft begrenzt. Diese Seite ist dann bei dem im Fahrzeug verbauten Lüftungskanal in der Regel die dem Innenraum des Fahrzeugs zugewandte Unterseite des Lüftungskanals.

Der erfindungsgemäße Lüftungskanal hat den Vorteil, dass bei einem verbauten Kanal immer links wie rechts des ersten Teilkanals für Kaltluft je ein Teil des zweiten Teilkanals für Warmluft angeordnet ist, der bis zu der einen Seite heranreicht.

Die Befestigungsstellen erstrecken sich jeweils entlang der Längsrichtung des Kanals. Das flexible Flächengebilde ist insbesondere als textiles Flächengebilde ausgebildet.

Gemäß einer bevorzugten Ausführungsform der Erfindung gibt es -im Querschnitt des Kanals gesehen- genau diese beiden Befestigungsstellen. Darüber hinaus gibt es also keine weiteren Befestigungsstellen sondern höchstens Berührpunkte, an denen das flexible Flächengebilde den Innenumfang der Kanalwandung (temporär) berührt.

Gemäß einer weiteren bevorzugten Ausführungsform der Erfindung ist vorgesehen, dass das flexible Flächengebilde eine derartige Form und Fläche aufweist, dass es bei entsprechenden Luftdruck- und Volumenstromverhältnissen bis an die der einen Seite gegenüberliegende Seite reicht. Bei dieser Ausführungsform also entsprechenden Luftdruck- und Volumenstromverhältnissen ein zweigeteilter zweiter Teilkanal ergeben.

Das flexible Flächengebilde ist bevorzugt als vollflexible Membran ausgebildet.

Insbesondere ist vorgesehen, dass die Wandung Luftauslässe aufweist, die den ersten Teilkanal für Kaltluft mit der Umgebung des Lüftungskanals verbindet und Luftauslässe aufweist, die den zweiten Teilkanal für Warmluft mit der Umgebung des Lüftungskanals, insbesondere mit weiteren Kanälen des Belüftungssystems, verbindet.

Gemäß noch einer weiteren bevorzugten Ausführungsform der Erfindung ist vorgesehen, dass der Querschnitt des Lüftungskanals rechteckig ist.

Bei dem erfindungsgemäßen Fahrzeug mit dem Belüftungssystem, das den oberhalb eines Innenraums des Fahrzeugs angeordneten Lüftungskanal aufweist, ist vorgesehen, dass der Lüftungskanal als ein Kanal nach einem der vorhergehenden Ansprüche ausgebildet ist und dass die besagte Seite der Kanalwandung, an der die beiden Befestigungsstellen angeordnet sind, die dem Innenraum des Fahrzeugs zugewandten Seite der Kanalwandung ist.

Ein solches Fahrzeug weist einen Lüftungskanal eines Belüftungssystems auf, der oberhalb eines Innenraums des Fahrzeugs angeordnet ist. Der Kanal weist eine den Kanal nach außen begrenzenden Kanalwandung und ein im Inneren angeordnetes flexibles Flächengebilde auf. Dieses Flächengebilde erstreckt sich -im Querschnitt des Kanals gesehen- von der ersten Befestigungsstelle am Innenumfang der Kanalwandung bis zu der zu dieser ersten Befestigungsstelle beabstanded angeordneten zweiten Befestigungsstelle am Innenumfang der Kanalwandung und teilt den Kanal in einen ersten Teilkanal für Kaltluft und einen zweiten Teilkanal für Warmluft auf. Dabei ist der Querschnitt jedes der Teilkanäle unter Verkleinerung des Querschnitts des jeweils anderen Teilkanals mittels einer allein durch die Luftdruck- und Volumenstromverhältnisse in den Teilkanälen steuerbare Verformung des flexiblen Flächengebildes vergrößerbar. Die beiden Befestigungsstellen sind beide auf der dem Innenraum zugewandten Seite der Kanalwandung angeordnet, wobei das flexible Flächengebilde und diese Seite der Kanalwandung den ersten Teilkanal für die Kaltluft bilden. Das Fahrzeug ist insbesondere ein Schienenfahrzeug zur Personenbeförderung.

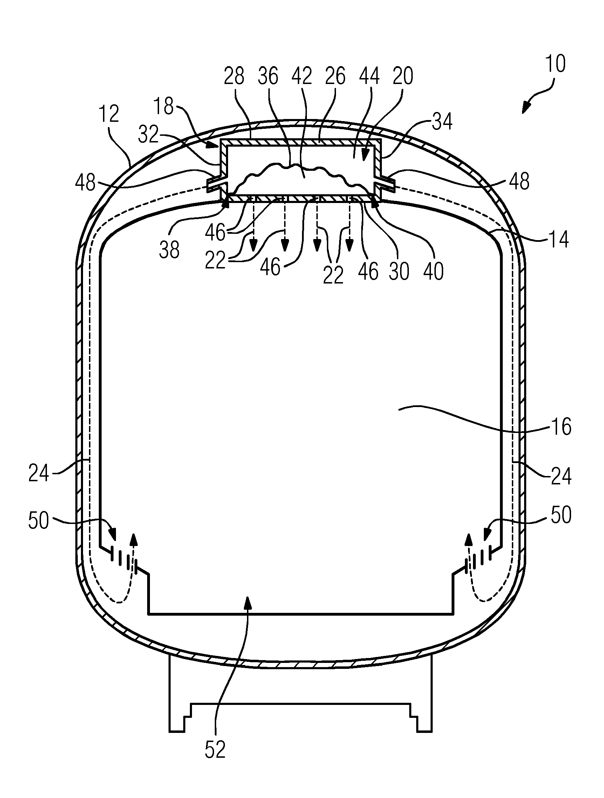

Nachfolgend wird ein Ausführungsbeispiel der Erfindung anhand einer Zeichnung näher erläutert. Darin zeigt die
- Fig. 1: ein Schienenfahrzeug zur Personenbeförderung mit einem Belüftungssystem, das einen oberhalb eines Innenraums des Fahrzeugs angeordneten Lüftungskanal gemäß einer bevorzugten Ausführungsform der Erfindung aufweist.

Die Fig. 1 zeigt einen Wagen eines Schienenfahrzeugs 10 zur Personenbeförderung im Querschnitt. Der Wagen weist einen Rohbau 12 auf, in dem durch eine Innenverkleidung 14 ein Innenraum 16 zur Personenbeförderung ausgebildet ist. Weiterhin weist das Schienenfahrzeug 10 ein Belüftungssystem 18 mit einem Lüftungskanal 20 und diversen von diesem Lüftungskanal 20 ausgehenden und in dem Innenraum 16 mündenden Strömungspfaden (Pfeile 22, 24) auf. Die entsprechenden Strömungspfade werden durch Strömungsleitelemente vorgegeben. Der Lüftungskanal 20 ist oberhalb des Innenraums 16 angeordnet und erstreckt sich längs des Schienenfahrzeugs 10 beziehungsweise längs des Wagens. Der Lüftungskanal 20 weist eine äußere Kanalwandung 26 auf, die den Kanal 20 nach außen begrenzt. Diese Kanalwandung 26 wird im gezeigten Beispiel von jeweils einer ebenen Wand an ihrer Oberseite 28 ihrer Unterseite 30 sowie ihrer linken Seite 32 und ihrer rechten Seite 34 gebildet. Der Kanal 20 hat somit einen rechteckigen Querschnitt.

Im Inneren der Kanalwandung 26 ist ein flexibles Flächengebilde 36 angeordnet, das sich -im Querschnitt des Kanals 20 gesehen- von einer ersten Befestigungsstelle 38 am Innenumfang der Unterseite 30 der Kanalwandung 26 bis zu einer zu dieser ersten Befestigungsstelle 38 beabstanded angeordneten zweiten Befestigungsstelle 40, ebenfalls am Innenumfang der Unterseite 30 der Kanalwandung 26, erstreckt. Die erste Befestigungsstelle 38 befindet sich in der Kante zwischen den Wänden der linken Seite 32 und der Unterseite 30, die zweite Befestigungsstelle 40 befindet sich in der Kante zwischen den Wänden der rechten Seite 34 und der Unterseite 30. Die beiden Befestigungsstellen 38, 40 sind also auf der gleichen Seite des Lüftungskanals 20, nämlich auf dessen Unterseite 30, - jeweils am Innenumfang der Wandung auf dieser Seite 30- angeordnet.

Das flexible Flächengebilde 36 teilt den Belüftungskanal 20 in einen ersten Teilkanal 42 für Kaltluft und einen zweiten Teilkanal 44 für Warmluft auf, wobei die beiden Teilkanäle 42, 44 parallel zueinander in Längsrichtung des Lüftungskanals 20 verlaufen und der Querschnitt jedes der Teilkanäle 42, 44 unter Verkleinerung des Querschnitts des jeweils anderen Teilkanals 44, 42 mittels einer allein durch die Luftdruck- und Volumenstromverhältnisse in den Teilkanälen 42, 44 gesteuerten Verformung des flexiblen Flächengebildes 36 vergrößerbar beziehungsweise verkleinerbar ist. Für diese Luftdruck- und Volumenstromverhältnisse sorgen nicht gezeigte Lüfter des Belüftungssystems 18.

Der erste Teilkanal 42 für Kaltluft wird von dem flexiblen Flächengebilde 36 und der Wand an der Unterseite 30 der Kanalwandung 36 begrenzt. Der zweite Teilkanal 44 für Warmluft wird von dem flexiblen Flächengebilde 36 und dem Rest der Kanalwandung 36 begrenzt. Dieser Rest der Kanalwandung sind die Wände der linken Seite 32, der rechten Seite 34 und der Oberseite 28.

In der Wand der Unterseite 30 sind Luftauslässe 46 in Form von Durchbrüchen ausgebildet, die jeweils einen direkten Luftstrom (Pfeil 22) vom ersten Teilkanal 42 für Kaltluft in den Innenraum 16 des Fahrzeugs 10 ermöglichen.

An den Wänden auf der linken und der rechten Seite 32, 34 sind als Auslassdüsen ausgebildete Luftauslässe 48 ausgebildet. Diese Führen entsprechende Luftströme (Pfeile 24) außen um den Innenraum des Fahrzeugs 10 herum bis zu Lüftungsschlitzen 50 im Bodenbereich 52 des Innenraums. Durch diese Lüftungsschlitzen 50 wird die Warmluft von unten in den Innenraum 16 geleitet.

Es ergibt sich die folgende Funktion:
Durch die Verwendung einer flexiblen Abtrennung zwischen den Teilkanälen 42, 44 für Warm- bzw. Kaltluft in Form des flexible Flächengebildes 36 kann der Gesamtquerschnitt des Lüftungskanals 20 gegenüber einem Lüftungskanal mit starrer Wandung und starrer Abtrennung verkleinert werden, da zur Belüftung des Innenraums 16 entweder nur Warmluft oder nur Kaltluft verwendet wird. Nie werden gleichzeitig größere Mengen Kalt- und Warmluft in den Innenraum 16 des Fahrzeugs 10 geleitet.

Dadurch, dass die Befestigungsstellen 38, 40 des flexible Flächengebildes 36 an der Kanalwandung 26 beide an der Wand auf der dem Innenraum 16 des Fahrzeugs 10 zugewandten Seite, also der Unterseite 30 angeordnet sind, ist immer links wie rechts des ersten Teilkanals 42 für Kaltluft je ein Teil des zweiten Teilkanals 44 für Warmluft angeordnet, der bis zu der Unterseite 30 hinunterreicht. Die Luftauslässe 48, die den zweiten Teilkanal 44 mit der Umgebung des Kanals 20 verbinden, können daher bei dieser Art von Lüftungskanal 20 sehr weit unten angeordnet sein. Dadurch kann der Kanal 20 insgesamt wesentlich flacher aufgebaut sein als die aus dem Stand der Technik bekannten Kanäle mit flexiblem Flächengebilde.

## Patentansprüche

1. Lüftungskanal (20) für ein Belüftungssystem (18) eines Fahrzeugs, insbesondere eines Schienenfahrzeugs (10) zur Personenbeförderung, mit einer den Kanal (20) nach außen begrenzenden Kanalwandung (26) und einem im Inneren des Kanals (20) angeordneten flexiblen Flächengebilde (36), das sich -im Querschnitt des Kanals (20) gesehen- von einer ersten Befestigungsstelle (38) am Innenumfang der Kanalwandung (26) bis zu einer zu dieser ersten Befestigungsstelle (38) beabstanded angeordneten zweiten Befestigungsstelle (40) am Innenumfang der Kanalwandung (26) erstreckt und den Kanal (20) in einen ersten Teilkanal (42) für Kaltluft und einen zweiten Teilkanal (44) für Warmluft aufteilt, wobei der Querschnitt jedes der Teilkanäle (42, 44) unter Verkleinerung des Querschnitts des jeweils anderen Teilkanals (44, 42) mittels einer allein durch die Luftdruck- und Volumenstromverhältnisse in den Teilkanälen (42, 44) steuerbare Verformung des flexiblen Flächengebildes (36) vergrößerbar ist,
**dadurch gekennzeichnet, dass** die beiden Befestigungsstellen (38, 40) auf der gleichen Seite (30) der Kanalwandung (26) angeordnet sind, wobei das flexible Flächengebilde (36) und diese Seite (30) der Kanalwandung (36) den ersten Teilkanal (42) für die Kaltluft bilden.

2. Lüftungskanal nach Anspruch 1, **dadurch gekennzeichnet, dass** es -im Querschnitt des Kanals (20) gesehen- nur genau diese beiden Befestigungsstellen (38, 40) gibt.

3. Lüftungskanal nach Anspruch 1 oder 2, **dadurch g e - kennzeichnet**, dass das flexible Flächengebilde (36) eine derartige Form und Fläche aufweist, dass es bei entsprechenden Luftdruck- und Volumenstromverhältnissen bis an die der einen Seite (30) gegenüberliegende Seite (28) reicht.

4. Lüftungskanal nach einem der Ansprüche 1 bis 3, **dadurch gekennzeichnet, dass** das flexible Flächengebilde (36) als vollflexible Membran ausgebildet ist.

5. Lüftungskanal nach einem der Ansprüche 1 bis 4, **dadurch gekennzeichnet, dass** die beiden Befestigungsstellen (38, 40) an einander gegenüberliegenden Enden der einen Seite (30) der Kanalwandung (26) angeordnet sind, wobei jedes dieser Enden einen Übergang zum Rest der Wandung bildet.

6. Lüftungskanal nach einem der Ansprüche 1 bis 5, **dadurch gekennzeichnet, dass** die beiden Teilkanäle (42, 44) parallel zueinander in Längsrichtung des Lüftungskanals (20) verlaufen.

7. Lüftungskanal nach einem der Ansprüche 1 bis 6, **dadurch gekennzeichnet, dass** die Wandung Luftauslässe (46) aufweist, die den ersten Teilkanal (42) für Kaltluft mit der Umgebung des Lüftungskanals (20) verbindet und Luftauslässe (48) aufweist, die den zweiten Teilkanal (44) für Warmluft mit der Umgebung des Lüftungskanals (20) verbindet.

8. Lüftungskanal nach einem der Ansprüche 1 bis 7, **dadurch gekennzeichnet, dass** der Querschnitt des Kanals (20) rechteckig ist.

9. Fahrzeug, insbesondere Schienenfahrzeug (10) zur Personenbeförderung, mit einem Belüftungssystem (18), das einen oberhalb eines Innenraums (16) des Fahrzeugs (10) angeordneten Lüftungskanal (20) aufweist, **dadurch gekennzeich**ne t, dass der Lüftungskanal (20) als ein Kanal (20) nach einem der vorhergehenden Ansprüche ausgebildet ist und dass die besagte Seite (30) der Kanalwandung (26), an der die beiden Befestigungsstellen (38, 40) angeordnet sind, die dem Innenraum (16) des Fahrzeugs (10) zugewandten Seite (30) der Kanalwandung (26) ist.
